# DEMANDE DE BREVET EUROPEEN

(11) **EP 4 432 175 A1**
(43) Date de publication de la demande: **18.09.2024**
(21) Numéro de dépôt: 23305351.1
(22) Date de dépôt: 15.03.2023
(51) Int. Cl.: G06N 20/00

(54) **PROCÉDÉ DE PARAMÉTRAGE D'UNE CHAÎNE DE TRAITEMENT DE DONNÉES**

(71) Demandeur: ATOS FRANCE, 95870 Bezons (FR)
(72) Inventeur: LECROART, Yannick, 34280 La Grande Motte (FR); AYOUBI, Kamal, 34070 Montpellier (FR); MAISONNASSE, Loïc, 34130 Mauguio (FR)
(74) Mandataire: Novagraaf Technologies

(57) **Abrégé**

L'invention concerne un procédé de paramétrage d'une chaîne (4) de traitement de données comportant un étage de calcul (10), le procédé comprenant les étapes :
- détermination d'une signature d'entrée d'un flux (6) de données d'entrée ;
- calcul d'un score de similarité courant entre la signature d'entrée et une signature courante associée à un jeu de données d'entraînement d'un modèle d'intelligence artificielle courant (12) implémenté par l'étage de calcul (10) ;
- si le score de similarité courant calculé est en dehors d'une plage acceptable :
• pour chacun parmi au moins un modèle d'intelligence artificielle auxiliaire (16), calcul d'un score de similarité auxiliaire correspondant entre la signature d'entrée et une signature auxiliaire d'un jeu de données d'entraînement auxiliaire associé ;
• configuration de l'étage de calcul (10) de façon à implémenter le modèle d'intelligence artificielle auxiliaire (16) associé à la signature auxiliaire qui présente le meilleur score de similarité auxiliaire.

## Description

La présente invention concerne un procédé de paramétrage d'une chaîne de traitement de données, la chaîne de traitement comportant un étage de calcul pour le traitement d'un flux de données d'entrée.

L'invention concerne également un programme d'ordinateur et un dispositif mettant en oeuvre un tel procédé.

L'invention s'applique au domaine des objets connectés, et en particulier au traitement des données fournies par de tels objets connectés.

### État de la technique

Dans le domaine des objets connectés (ou IoT, de l'anglais « *Internet of Things* »), il est connu d'avoir recours à des technologies de communication bas débit, telles que les protocoles LoraWan (pour « *Long Range Wide-area network »,* ou réseau étendu à longue portée) ou NB-IoT (pour « *Narrowband Internet of Things »,* ou internet des objets à bande étroite).

Il est également connu que, dans ce domaine, les objets connectés sont susceptibles d'être soumis à de fortes contraintes de terrain (absence de couverture optimale, sous-sol, sous-terrain, interférences, par exemple) ou matérielles (gestion et optimisation de l'usage batterie, notamment).

Il en résulte que les données remontées par un groupe d'objets connectés à destination d'une chaîne de traitement desdites données, sont susceptible d'être transmises de façon très clairsemée.

Une telle situation n'est pas satisfaisante.

En effet, la faible quantité de données remontées par le groupe d'objets connectés résulte en ce qu'un modèle d'intelligence artificielle implémenté dans ladite chaîne de traitement pour le traitement desdites données, est généralement insuffisamment entraîné. Il en découle que les performances du modèle d'intelligence artificielle sont généralement peu satisfaisantes. En particulier, la faible exhaustivité des données remontées ne permet généralement pas de prédire des fluctuations temporelles desdites données.

Un but de la présente invention est de remédier à au moins un de ces inconvénients.

Un autre but de l'invention est de proposer un procédé de paramétrage d'une chaîne de traitement qui confère à ladite chaîne de traitement des performances satisfaisantes, même en cas de faible abondance des données en provenance d'un groupe correspondant d'objets connectés.

### Exposé de l'invention

À cet effet, l'invention concerne un procédé de paramétrage du type précité, mis en oeuvre par ordinateur et comprenant les étapes de :
- détermination d'une signature d'entrée d'au moins une partie du flux de données d'entrée ;
- calcul d'un score de similarité courant, au regard d'une mesure de similarité prédéterminée, entre la signature d'entrée déterminée et une signature courante, ladite signature courante étant associée à un jeu de données d'entraînement courant sur la base duquel a été préalablement entraîné un modèle d'intelligence artificielle courant implémenté par l'étage de calcul pour ledit traitement du flux de données d'entrée ; et
- si le score de similarité courant calculé est en dehors d'une plage acceptable prédéterminée :
   - pour chacun parmi au moins un modèle d'intelligence artificielle auxiliaire, chaque modèle d'intelligence artificielle auxiliaire ayant été préalablement entraîné sur la base d'un jeu de données d'entraînement auxiliaire présentant une signature auxiliaire correspondante, calcul d'un score de similarité auxiliaire correspondant entre la signature d'entrée et la signature auxiliaire associée ;
   - configuration de l'étage de calcul de façon à implémenter, pour le traitement du flux de données d'entrée, le modèle d'intelligence artificielle auxiliaire associé à la signature auxiliaire qui, d'une part, présente un meilleur score de similarité auxiliaire avec la signature d'entrée que la signature courante et qui, d'autre part, présente le meilleur score de similarité auxiliaire.

En effet, le recours au score de similarité autorise la détection d'une situation dans laquelle des propriétés des données d'entrée dévient des données d'entraînement actuellement utilisées.

En outre, l'entraînement préalable d'une pluralité de modèles d'intelligence artificielle, sur la base de jeux de données d'entraînement auxiliaires présentant des propriétés variées, produit une pluralité de modèles susceptibles d'être implémentés dans le cas où une telle déviation viendrait à se produire.

Plus précisément, le procédé selon l'invention autorise un remplacement du modèle d'intelligence artificielle courant par le modèle d'intelligence artificielle auxiliaire pour lequel le jeu de données d'entraînement auxiliaire présente le plus de similarité avec les données actuellement reçues en provenance des objets connectés. En d'autres termes, les performances globales de la chaîne de traitement ne seront pas affectées de façon significative par la déviation mentionnée précédemment, dans la mesure où les performances du modèle d'intelligence artificielle auxiliaire sont vraisemblablement meilleures que celles du modèle d'intelligence artificielle courant pour ces nouvelles données.

De façon avantageuse, le procédé selon l'invention présente une ou plusieurs des caractéristiques suivantes, prises isolément ou selon toute combinaison techniquement possible :
la signature d'entrée est déterminée, à un instant courant donné quelconque, à partir des données d'entrée reçues dans une fenêtre temporelle de durée prédéterminée précédant l'instant courant ;
la signature d'entrée est une loi de probabilité des données d'entrée ;
la signature courante est une loi de probabilité des données du jeu de données d'entraînement courant ;
la signature auxiliaire est une loi de probabilité des données du jeu de données d'entraînement auxiliaire ;
le score de similarité courant est la valeur p sous l'hypothèse nulle « la signature d'entrée est identique à la signature courante », et le score de similarité auxiliaire est la valeur p sous l'hypothèse nulle « la signature auxiliaire est identique à la signature courante » ;
le score de similarité courant, respectivement le score de similarité courant auxiliaire, est :
   - le résultat d'un test de Student relatif à la signature courante, respectivement relatif à la signature auxiliaire ;
   - le résultat d'un test de Wilcoxon-Mann-Whitney représentatif d'une proximité entre la signature courante, respectivement la signature auxiliaire, et la signature d'entrée ; ou
   - le résultat d'un test de Kolmogorov-Smirnov représentatif d'une proximité entre la signature courante, respectivement la signature auxiliaire, et la signature d'entrée ;
le procédé comprend, en outre, les étapes de :
   - synthèse, à partir des données d'entrée, d'au moins un jeu de données synthétique ; et
   - pour chaque jeu de données synthétique, entraînement d'un modèle d'intelligence artificielle sur la base dudit jeu de données synthétique pour générer un modèle d'intelligence artificielle auxiliaire supplémentaire ;
l'étape de synthèse comprend les phases de :
   - détermination d'une loi de probabilité d'au moins une partie des données d'entrée ;
   - modification d'au moins un paramètre de la loi de probabilité déterminée pour créer au moins une loi de probabilité synthétique ; et
   - pour chaque loi de probabilité synthétique créée, génération, conformément à ladite loi de probabilité synthétique créée, d'une pluralité de valeurs formant un jeu de données synthétique.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif de paramétrage d'une chaîne de traitement de données, la chaîne de traitement comportant un étage de calcul pour le traitement d'un flux de données d'entrée,
le dispositif de paramétrage étant configuré pour :
- déterminer une signature d'entrée d'au moins une partie du flux de données d'entrée ;
- calculer un score de similarité courant, au regard d'une mesure de similarité prédéterminée, entre la signature d'entrée déterminée et une signature courante, ladite signature courante étant associée à un jeu de données d'entraînement courant sur la base duquel a été préalablement entraîné un modèle d'intelligence artificielle courant implémenté par l'étage de calcul pour ledit traitement du flux de données d'entrée ; et
- si le score de similarité courant calculé est en dehors d'une plage acceptable prédéterminée :
   - pour chacun parmi au moins un modèle d'intelligence artificielle auxiliaire, chaque modèle d'intelligence artificielle auxiliaire ayant été préalablement entraîné sur la base d'un jeu de données d'entraînement auxiliaire présentant une signature auxiliaire correspondante, calculer un score de similarité auxiliaire correspondant entre la signature d'entrée et la signature auxiliaire associée ;
   - configurer l'étage de calcul de façon à implémenter, pour le traitement du flux de données d'entrée, le modèle d'intelligence artificielle auxiliaire associé à la signature auxiliaire qui, d'une part, présente un meilleur score de similarité avec la signature d'entrée que la signature courante et qui, d'autre part, présente le meilleur score de similarité.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est une représentation schématique d'un dispositif de paramétrage selon l'invention ;
la figure 2 est un ordinogramme d'un procédé de paramétrage mis en oeuvre par le dispositif de paramétrage de la figure 1.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

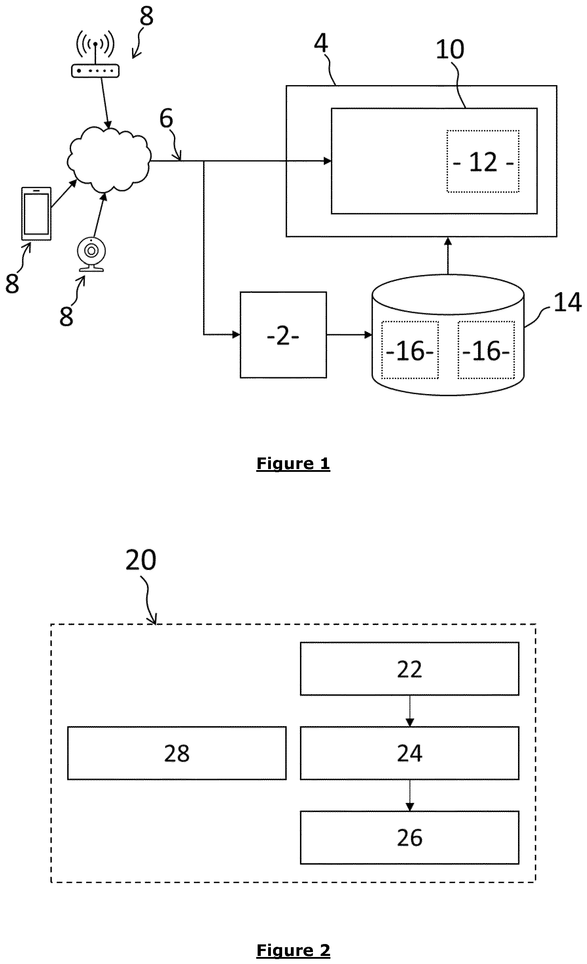

Un dispositif de paramétrage 2 selon l'invention, pour le paramétrage d'une chaîne 4 de traitement de données (par la suite appelée « chaîne de traitement »), est illustré par la figure 1.

La chaîne de traitement 4 est configurée pour traiter un flux 6 de données d'entrée reçu en provenance d'au moins une source 8, en particulier en provenance d'au moins un objet connecté.

Plus précisément, la chaîne de traitement 4 comprend un étage de calcul 10 adapté pour, en fonctionnement, mettre en oeuvre un modèle d'intelligence artificielle courant 12 pour le traitement du flux 6 de données d'entrée.

Le modèle d'intelligence artificielle courant 12 a été préalablement entraîné sur la base d'un jeu de données d'entraînement, dit « courant », correspondant. Un tel jeu de données d'entraînement courant est associé à une signature courante respective, décrite à travers un exemple dans ce qui va suivre.

En outre, la chaîne de traitement 4 est associée à une mémoire 14 configurée pour stocker au moins un modèle d'intelligence artificielle 16, dit « auxiliaire ».

Chaque modèle d'intelligence artificielle auxiliaire 16 a été préalablement entraîné sur la base d'un jeu de données d'entraînement correspondant, dit « auxiliaire ». En outre, chaque jeu de données d'entraînement auxiliaire est associé à une signature auxiliaire respective, décrite par la suite à travers un exemple.

Le dispositif de paramétrage 2 est destiné à modifier un paramétrage de la chaîne de traitement 4, et plus particulièrement de son étage de calcul 10. Plus spécifiquement, le dispositif de paramétrage 2 est destiné à modifier le paramétrage de la chaîne de traitement 4 en fonction des caractéristiques courantes du flux 6 de données d'entrée.

Le dispositif de paramétrage 2 est susceptible de se présenter sous une forme matérielle, telle qu'un ordinateur, un serveur, un processeur, une puce électronique, etc. Alternativement, ou de façon additionnelle, le dispositif de paramétrage 2 est susceptible de se présenter sous une forme logicielle telle qu'un programme d'ordinateur, ou une application, par exemple une application pour un appareil utilisateur de type tablette ou smartphone.

Pour réaliser un tel paramétrage, le dispositif de paramétrage 2 est configuré pour mettre en oeuvre un procédé de paramétrage 20, schématiquement illustré par la figure 2.

Comme cela apparaît sur cette figure, le procédé de paramétrage 20 comprend une étape 22 de détermination de signature d'entrée, une étape 24 de calcul de similarité et une étape de configuration 26 successives.

De façon optionnelle, le procédé de paramétrage 20 comprend également une étape d'enrichissement 28.

### Détermination de la signature d'entrée

Le dispositif de paramétrage 2 est configuré pour lire les données d'entrée du flux 6 de données d'entrée.

En outre, le dispositif de paramétrage 2 est configuré pour déterminer, au cours de l'étape 22 de détermination de signature d'entrée, une signature d'entrée d'au moins une partie du flux 6 de données d'entrée.

De préférence, à un instant courant donné quelconque, le dispositif de paramétrage 2 est configuré pour déterminer la signature d'entrée à partir des données d'entrée reçues dans une fenêtre temporelle de durée prédéterminée précédant l'instant courant. Une telle durée dépend, notamment, du cas d'usage, en particulier d'une fréquence attendue d'envoi de données par les sources 8. Par exemple, en fonction du cas d'usage, la durée prédéterminée vaut une semaine, ou encore un mois, voire un jour.

De préférence encore, le dispositif de paramétrage 2 est configuré pour déterminer la signature d'entrée comme étant une loi de probabilité des données d'entrée. Par exemple, le dispositif de paramétrage 2 est configuré pour déterminer si les données d'entrée sont régies par une loi de Poisson ou loi gaussienne, et, le cas échéant, pour en estimer les paramètres (espérance et/ou variance, par exemple). De façon plus générale, le choix de la loi de probabilité dépend du cas d'usage et du type de sources 8, notamment de leur programmation (sur batterie ou non) et/ou de la taille des données reçues, notamment lorsqu'elle est mise en regard de la fréquence de remontée des données (seconde, minute, horaire, hebdomadaire, mensuelle, etc.) et du nombre d'observations.

### Calcul de similarité

En outre, le dispositif de paramétrage 2 est configuré pour calculer, au cours de l'étape 24 de calcul de similarité, un score de similarité courant entre la signature d'entrée déterminée et la signature courante.

Dans le cas où la signature d'entrée est la loi de probabilité des données d'entrée, de préférence, la signature courante est une loi de probabilité des données du jeu de données d'entraînement courant sur la base duquel le modèle d'intelligence artificielle courant 12 a été entraîné.

Plus précisément, le dispositif de paramétrage 2 est configuré pour calculer le score de similarité courant au regard d'une mesure de similarité prédéterminée.

De préférence, dans le cas où chaque signature est une loi de probabilité, le score de similarité courant est la valeur p (en anglais *« p-value* ») sous l'hypothèse nulle : « la signature d'entrée est identique à la signature courante ». Une telle valeur p, connue de l'homme du métier, est définie comme la probabilité d'observer un jeu de données sous l'hypothèse nulle.

En variante, le score de similarité courant est le résultat d'un test de Student, connu en soi, c'est-à-dire un test dans lequel l'hypothèse nulle est vraie si la signature courante est une loi de Student. Un tel test est, par exemple mis en oeuvre lorsqu'il est déterminé que les données d'entrée sont régies par une loi de Student.

Selon une autre variante, le score de similarité courant est le résultat d'un test de Wilcoxon-Mann-Whitney, connu en soi. Plus précisément, dans ce cas, le résultat quantifie une proximité entre la loi de probabilité des données du jeu de données d'entraînement courant (c'est-à-dire la signature courante) et la loi de probabilité des données d'entrée (c'est-à-dire la signature d'entrée).

En alternative, le score de similarité courant est le résultat d'un test de Kolmogorov-Smirnov, connu en soi. Dans ce cas, le résultat est représentatif d'une proximité entre la loi de probabilité des données du jeu de données d'entraînement courant et la loi de probabilité des données d'entrée.

Le dispositif de paramétrage 2 est également configuré pour déterminer si le score de similarité courant calculé se trouve dans une plage acceptable prédéterminée ou non.

Par exemple, dans le cas où le score de similarité courant est la valeur p sous l'hypothèse nulle « la signature d'entrée est identique à la signature courante », le dispositif de paramétrage 2 est configuré pour déterminer si le score de similarité courant calculé est supérieur à 0,1.

### Configuration

En outre, le dispositif de paramétrage 2 est configuré de façon à calculer un score de similarité auxiliaire pour chaque modèle d'intelligence artificielle auxiliaire 16, s'il a été déterminé que le score de similarité courant calculé se trouve en dehors de la plage acceptable.

Plus précisément, pour chaque modèle d'intelligence artificielle auxiliaire 16, le dispositif de paramétrage 2 est configuré pour calculer le score de similarité auxiliaire correspondant comme étant un score de similarité entre la signature auxiliaire associée et la signature d'entrée.

De préférence, le score de similarité auxiliaire est calculé de façon similaire au score de similarité courant précédemment décrit, les données du jeu de données d'entraînement auxiliaire se substituant aux données du jeu de données d'entraînement courant.

Dans le cas où la signature d'entrée est la loi de probabilité des données d'entrée, de préférence, pour chaque modèle d'intelligence artificielle auxiliaire 16, la signature auxiliaire correspondante est une loi de probabilité des données du jeu de données d'entraînement auxiliaire sur la base duquel ledit modèle d'intelligence artificielle auxiliaire 16 a été entraîné.

En outre, s'il existe au moins une signature auxiliaire présentant un meilleur score de similarité avec la signature d'entrée que la signature courante, alors le dispositif de paramétrage 2 est adapté pour configurer l'étage de calcul 10 de façon à ce que ledit étage de calcul 10 implémente, pour le traitement du flux 6 de données d'entrée, le modèle d'intelligence artificielle auxiliaire 16 associé à la signature auxiliaire qui présente le meilleur score de similarité.

Par exemple, dans le cas où le score de similarité courant est la valeur p sous l'hypothèse nulle « la signature d'entrée est identique à la signature courante », le dispositif de paramétrage 2 est adapté pour configurer l'étage de calcul 10 de façon à implémenter le modèle d'intelligence artificielle auxiliaire 16 associé à la signature auxiliaire pour laquelle la valeur p est maximale.

### Enrichissement

De façon optionnelle, le dispositif de paramétrage 2 est configuré pour, au cours de l'étape d'enrichissement 28, synthétiser au moins un jeu de données synthétique à partir de tout ou partie des données du flux 6 de données d'entrée.

De préférence, pour réaliser une telle synthèse, le dispositif de paramétrage 2 est configuré pour déterminer une loi de probabilité d'au moins une partie des données d'entrée, par exemple les données d'entrée reçues au cours d'un intervalle de temps prédéterminé précédant un instant courant.

Le dispositif de paramétrage 2 est également configuré de façon à modifier au moins un paramètre de la loi de probabilité déterminée pour créer au moins une loi de probabilité synthétique.

En outre, pour chaque loi de probabilité synthétique créée, le dispositif de paramétrage 2 est configuré pour générer une pluralité de valeurs conformément à ladite loi de probabilité synthétique : les valeurs ainsi générées forment un jeu de données synthétique.

En outre, pour chaque jeu de données synthétique, le dispositif de paramétrage 2 est configuré pour commander la chaîne de traitement 4 de sorte qu'elle entraîne un modèle d'intelligence artificielle sur la base dudit jeu de données synthétique. Il en résulte un modèle d'intelligence artificielle auxiliaire 16 supplémentaire.

De façon alternative, pour chaque jeu de données synthétique, le dispositif de paramétrage 2 est configuré pour entraîner lui-même un modèle d'intelligence artificielle sur la base dudit jeu de données synthétique, et ce afin de générer un modèle d'intelligence artificielle auxiliaire 16 supplémentaire.

De préférence, le dispositif de paramétrage 2 commande le stockage, dans la mémoire 14, du modèle d'intelligence artificielle auxiliaire 16 supplémentaire généré.

L'étape d'enrichissement 28 est, par exemple, mise en oeuvre parallèlement aux étapes de détermination de signature d'entrée, de calcul de similarité et de configuration.

### Fonctionnement

Le fonctionnement du dispositif de paramétrage 2 va maintenant être décrit.

Lors de son fonctionnement, le dispositif de paramétrage 2 reçoit le flux 6 de données d'entrée, et met en oeuvre, par exemple en continu, l'étape 22 de détermination de signature d'entrée et l'étape 24 de calcul de similarité.

Plus précisément, au cours de l'étape 22 de détermination de signature d'entrée, le dispositif de paramétrage 2 lit les données d'entrée du flux 6 de données d'entrée, et détermine la signature d'entrée d'au moins une partie du flux 6 de données d'entrée.

Puis, au cours de l'étape 24 de calcul de similarité, le dispositif de paramétrage 2 calcule le score de similarité courant entre la signature d'entrée déterminée et la signature courante.

Si le score de similarité courant calculé se trouve en dehors de la plage acceptable prédéterminée, alors, le dispositif de paramétrage 2 met en oeuvre l'étape de configuration 28.

Plus précisément, au cours de l'étape de configuration 28, le dispositif de paramétrage 2 calcule, pour chaque modèle d'intelligence artificielle auxiliaire 16, le score de similarité auxiliaire correspondant entre la signature auxiliaire associée et la signature d'entrée.

En outre, s'il existe au moins une signature auxiliaire présentant un meilleur score de similarité avec la signature d'entrée que la signature courante, alors le dispositif de paramétrage 2 configure l'étage de calcul 10 pour que ledit l'étage de calcul 10 implémente, pour le traitement du flux 6 de données d'entrée, le modèle d'intelligence artificielle auxiliaire 16 associé à la signature auxiliaire qui présente le meilleur score de similarité.

En outre, au cours de l'étape d'enrichissement 28, parallèle ou non aux étapes 22, 24 et 26 précédemment mentionnées, le dispositif de paramétrage 2 synthétise également au moins un jeu de données synthétique à partir des données d'entrée.

Puis, pour chaque jeu de données synthétique, le dispositif de paramétrage 2 commande l'entraînement d'un modèle d'intelligence artificielle sur la base dudit jeu de données synthétique, de façon à générer un modèle d'intelligence artificielle auxiliaire 16 supplémentaire.

Le modèle d'intelligence artificielle auxiliaire supplémentaire ainsi généré est alors enregistré dans la mémoire 14.

Bien entendu l'invention n'est pas limitée aux exemples qui viennent d'être décrits.

## Revendications

1. Procédé (20) de paramétrage d'une chaîne (4) de traitement de données, la chaîne de traitement (4) comportant un étage de calcul (10) pour le traitement d'un flux (6) de données d'entrée,
le procédé de paramétrage étant mis en oeuvre par ordinateur et comprenant les étapes de :
- détermination (26) d'une signature d'entrée d'au moins une partie du flux (6) de données d'entrée ;
- calcul (24) d'un score de similarité courant, au regard d'une mesure de similarité prédéterminée, entre la signature d'entrée déterminée et une signature courante, ladite signature courante étant associée à un jeu de données d'entraînement courant sur la base duquel a été préalablement entraîné un modèle d'intelligence artificielle courant (12) implémenté par l'étage de calcul (10) pour ledit traitement du flux (6) de données d'entrée ; et
- si le score de similarité courant calculé est en dehors d'une plage acceptable prédéterminée :
• pour chacun parmi au moins un modèle d'intelligence artificielle auxiliaire (16), chaque modèle d'intelligence artificielle auxiliaire (16) ayant été préalablement entraîné sur la base d'un jeu de données d'entraînement auxiliaire présentant une signature auxiliaire correspondante, calcul d'un score de similarité auxiliaire correspondant entre la signature d'entrée et la signature auxiliaire associée ;
• configuration (26) de l'étage de calcul de façon à implémenter, pour le traitement du flux de données d'entrée, le modèle d'intelligence artificielle auxiliaire (16) associé à la signature auxiliaire qui, d'une part, présente un meilleur score de similarité auxiliaire avec la signature d'entrée que la signature courante et qui, d'autre part, présente le meilleur score de similarité auxiliaire.

2. Procédé de paramétrage (20) selon la revendication 1, dans lequel la signature d'entrée est déterminée, à un instant courant donné quelconque, à partir des données d'entrée reçues dans une fenêtre temporelle de durée prédéterminée précédant l'instant courant.

3. Procédé de paramétrage (20) selon la revendication 1 ou 2, dans lequel :
- la signature d'entrée est une loi de probabilité des données d'entrée ; et/ou
- la signature courante est une loi de probabilité des données du jeu de données d'entraînement courant ; et/ou
- la signature auxiliaire est une loi de probabilité des données du jeu de données d'entraînement auxiliaire.

4. Procédé de paramétrage (20) selon la revendication 3, dans lequel le score de similarité courant est la valeur p sous l'hypothèse nulle « la signature d'entrée est identique à la signature courante », et le score de similarité auxiliaire est la valeur p sous l'hypothèse nulle « la signature auxiliaire est identique à la signature courante ».

5. Procédé de paramétrage (20) selon la revendication 3, dans lequel le score de similarité courant, respectivement le score de similarité auxiliaire, est :
- le résultat d'un test de Student relatif à la signature courante, respectivement relatif à la signature auxiliaire ;
- le résultat d'un test de Wilcoxon-Mann-Whitney représentatif d'une proximité entre la signature courante, respectivement la signature auxiliaire, et la signature d'entrée ; ou
- le résultat d'un test de Kolmogorov-Smirnov représentatif d'une proximité entre la signature courante, respectivement la signature auxiliaire, et la signature d'entrée.

6. Procédé de paramétrage (20) selon l'une quelconque des revendications 1 à 5, comprenant, en outre, les étapes de :
- synthèse, à partir des données d'entrée, d'au moins un jeu de données synthétique ; et
- pour chaque jeu de données synthétique, entraînement d'un modèle d'intelligence artificielle sur la base dudit jeu de données synthétique pour générer un modèle d'intelligence artificielle auxiliaire supplémentaire.

7. Procédé de paramétrage (20) selon la revendication 6, dans lequel l'étape de synthèse comprend les phases de :
- détermination d'une loi de probabilité d'au moins une partie des données d'entrée ;
- modification d'au moins un paramètre de la loi de probabilité déterminée pour créer au moins une loi de probabilité synthétique ; et
- pour chaque loi de probabilité synthétique créée, génération, conformément à ladite loi de probabilité synthétique créée, d'une pluralité de valeurs formant un jeu de données synthétique.

8. Programme d'ordinateur comprenant des instructions exécutables qui, lorsqu'elles sont exécutées par ordinateur, mettent en en oeuvre les étapes du procédé selon l'une quelconque des revendications précédentes.

9. Dispositif (2) de paramétrage d'une chaîne (4) de traitement de données, la chaîne de traitement (4) comportant un étage de calcul (10) pour le traitement d'un flux (6) de données d'entrée,
le dispositif de paramétrage (2) étant configuré pour :
- déterminer une signature d'entrée d'au moins une partie du flux (6) de données d'entrée ;
- calculer un score de similarité courant, au regard d'une mesure de similarité prédéterminée, entre la signature d'entrée déterminée et une signature courante, ladite signature courante étant associée à un jeu de données d'entraînement courant sur la base duquel a été préalablement entraîné un modèle d'intelligence artificielle courant (12) implémenté par l'étage de calcul (10) pour ledit traitement du flux (6) de données d'entrée ; et
- si le score de similarité courant calculé est en dehors d'une plage acceptable prédéterminée :
• pour chacun parmi au moins un modèle d'intelligence artificielle auxiliaire (16), chaque modèle d'intelligence artificielle auxiliaire (16) ayant été préalablement entraîné sur la base d'un jeu de données d'entraînement auxiliaire présentant une signature auxiliaire correspondante, calculer un score de similarité auxiliaire correspondant entre la signature d'entrée et la signature auxiliaire associée ;
• configurer l'étage de calcul (10) de façon à implémenter, pour le traitement du flux (6) de données d'entrée, le modèle d'intelligence artificielle auxiliaire (16) associé à la signature auxiliaire qui, d'une part, présente un meilleur score de similarité avec la signature d'entrée que la signature courante et qui, d'autre part, présente le meilleur score de similarité.
